(19) Europäisches Patentamt
European Patent Office
Office européen des brevets

(11) EP 2 638 108 B1

(12) **EUROPEAN PATENT SPECIFICATION**

(45) Date of publication and mention of the grant of the patent:
**28.01.2015 Bulletin 2015/05**

(21) Application number: **11782410.2**

(22) Date of filing: **08.11.2011**

(51) Int Cl.:
***C08L 23/10*** (2006.01) ***C08F 297/08*** (2006.01)

(86) International application number:
**PCT/EP2011/069615**

(87) International publication number:
**WO 2012/062736 (18.05.2012 Gazette 2012/20)**

(54) **SOFT HETEROPHASIC PROPYLENE COPOLYMERS**

WEICHE HETEROPHASIGES PROPYLENCOPOLYMER

COPOLYMÈRE DE PROPYLÈNE HÉTÉROPHASIQUE SOUPLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2010 EP 10190981**

(43) Date of publication of application:
**18.09.2013 Bulletin 2013/38**

(73) Proprietor: **Borealis AG**
**1220 Vienna (AT)**

(72) Inventors:
- **LESKINEN, Pauli**
  **FI-00700 Helsinki (FI)**
- **GREIN, Christelle**
  **A-4020 Linz (AT)**

(74) Representative: **Lux, Berthold et al**
**Maiwald Patentanwalts GmbH**
**Elisenhof**
**Elisenstraße 3**
**80335 München (DE)**

(56) References cited:
**EP-A1- 0 699 711**
**EP-A1- 1 659 151**
**WO-A1-2009/129873**
**WO-A1-2010/115878**
**WO-A1-2010/149529**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 638 108 B1

## Description

The present invention relates to non-sticky heterophasic propylene copolymers with high softness together with high melting temperatures as well as to a process for producing these heterophasic propylene copolymers and their use.

In principle, heterophasic or block propylene copolymers have a two-phase structure, consisting of a polypropylene matrix and an elastomeric phase which is dispersively distributed. The elastomeric phase contains a propylene copolymer rubber, like ethylene propylene rubber (EPR). The rubber component is thus a copolymer of propylene and a further alpha-olefin, like ethylene and is mainly in amorphous (= xylene cold soluble, XCS) form.

The XCS fraction of such heterophasic propylene copolymers comprises besides the total amount of rubber dispersed within the matrix also amorphous parts of the polypropylene matrix. However, as it is common in the state of the art, as a first approximation, that the XCS fraction of the heterophasic propylene copolymer indicates the total amount of rubber, since the XCS fraction is easy to measure and frequently used as a parameter indicating the amount of elastomeric components within heterophasic compositions.

As is well known from the prior art a high amount of xylene cold soluble fraction (XCS) is desirable for the production of soft heterophasic propylene copolymers. The threshold content of XCS fraction is related to the stickiness of the final polymer. The tackiness and stickiness of the polymer results in particle agglomeration and/or adhesion of the formed heterophasic copolymer to the walls of the reactors and leads to sheeting in the transfer lines, hoppers and vessels. In severe cases such reactor fouling may also cause blocking of the system (in the reactor or downstream equipment), respectively reactor shut-down, which is detrimental to production efficiency.

Thus there is an ongoing need for heterophasic propylene copolymers with high softness, thus containing a large amount of XCS fraction, respectively of rubber phase and being simultaneously not sticky, thus having excellent process properties.

A further desirable property of the heterophasic propylene copolymers is an improved thermal behaviour, respectively a high melting temperature (Tm).

Such demands can be challenging, since many polymer properties are directly or indirectly interrelated. Due to these interrelations it has been problematic to develop polymers with the combination of high softness and non-stickiness with high melting temperature.

Accordingly, the object of the present invention is to provide heterophasic propylene copolymers having a high melting temperature (Tm) and at the same time a low flexural modulus, i.e. low stiffness and thus high softness, and being simultaneously not sticky.

The finding of the present invention is that these properties, i.e. high melting temperature, low flexural modulus and non-stickiness, can be obtained with heterophasic propylene copolymers comprising a unimodal polypropylene matrix and a trimodal rubber phase.

Thus the present invention is directed to a heterophasic propylene copolymer comprising

a) a propylene homo- or copolymer matrix with an $MFR_2$ of $\geq$ 150 g/10 min according to ISO 1133 (230°C, 2.16 kg load) and

b) a trimodal elastomeric propylene copolymer dispersed in said matrix, said trimodal elastomeric propylene copolymer being trimodal with respect wherein to the molecular weight distribution and/or the comonomer content.

(i) the xylene cold soluble fraction of the heterophasic propylene copolymer at room temperature is present in an amount of 20 to 80 wt% of the of the heterophasic propylene copolymer,

(ii) the amorphous phase of the xylene cold soluble fraction of the heterophasic propylene copolymer has an intrinsic viscosity measured according to ISO 1628-1 (at 135°C in tetraline) of at least 2.5 dl/g

(iii) said of the heterophasic propylene copolymer has a flexural modulus lower than 800 MPa according to ISO 178, a melting temperature measured by DSC from 155 to 170°C and a total ethylene content from 10 to 30 wt%.

It has surprisingly been found that the heterophasic propylene copolymer of the present invention is featured with high softness, excellent impact behaviour in combination with high thermo-mechanical stability and non-stickiness.

The present invention is further directed to a process for the preparation of said heterophasic propylene copolymer.

In the following the invention is described in more detail.

A heterophasic propylene copolymer (HECO) according to the invention comprises a propylene homo- or copolymer matrix and dispersed therein an elastomeric propylene copolymer.

The propylene matrix can be a propylene homopolymer or a propylene copolymer. However it is preferred that the propylene matrix is a propylene homopolymer.

The expression homopolymer used in the instant invention relates to a polypropylene that consists substantially, i.e. of at least 97 wt%, preferably of at least 98 wt%, more preferably of at least 99 wt%, still more preferably of at least 99.8 wt% of propylene units. In a preferred embodiment only propylene units in the propylene homopolymer are detectable. The comonomer content can be determined with FT infrared spectroscopy.

Where the propylene matrix comprises a propylene copolymer, the propylene copolymer comprises monomers copolymerisable with propylene, for example comonomers such as ethylene and $C_4$ to $C_{20}$ alpha-olefins, in particular ethylene and $C_4$ to $C_{10}$ alpha-olefins, e.g. 1-butene or 1-hexene. The comonomer content in the propylene matrix is in such a case preferably relatively low, i.e. up to 4.0 wt%, more preferably 0.5 to 3.5 wt%, still more preferably 0.5 to 2.5 wt%, yet more preferably 0.5 to 2.0 wt%.

The propylene matrix can be unimodal or multimodal, like bimodal. However it is preferred that the propylene matrix is unimodal. Concerning the definition of unimodal and multimodal, like bimodal, it is referred to the definition below.

When the matrix is unimodal with respect to the molecular weight distribution, it may be prepared in a single stage process e.g. as slurry or gas phase process in a slurry or gas phase reactor. Preferably, the unimodal matrix is polymerised as a slurry polymerisation. Alternatively, the unimodal matrix may be produced in a multistage process using at each stage process conditions which result in similar polymer properties.

Where the propylene matrix comprises two or more different propylene polymers these may be polymers with different monomer make up and/or with different molecular weight distributions. These components may have identical or differing monomer compositions and tacticities.

Moreover it is preferred that the polymer matrix has a rather high melt flow rate (MFR), i.e. a rather low molecular weight.

The melt flow rate measured under a load of 2.16 kg at 230°C (ISO 1133) is denoted as $MFR_2$ (230°C). Accordingly, it is preferred that in the present invention the propylene matrix has an $MFR_2$ (230°C) equal to or above 150 g/10 min. Preferably, the propylene matrix has an $MFR_2$ (230°C) equal to or above 200 g/10 min, more preferably equal to or above 300 g/10 min. The $MFR_2$ (230°C) can be up to 1000 g/10 min.

As a further requirement of the heterophasic propylene copolymer the elastomeric copolymer must fulfill some properties so that the desired results can be achieved.

The trimodal elastomeric copolymer comprises 3 ethylene/propylene copolymer fractions, which differ from each other in view of the molecular weight distribution (MWD) and/or the comonomer content.

The expression "multimodal" or "bimodal" or "trimodal" used herein refers to the modality of the polymer, i.e.

- the form of its molecular weight distribution curve, which is the graph of the molecular weight fraction as a function of its molecular weight,

  and / or
- the form of its comonomer content distribution curve, which is the graph of the comonomer content as a function of the molecular weight of the polymer fractions.

When the distribution curves (molecular weight or comonomer content) from these fractions are superimposed to obtain the molecular weight distribution curve or the comonomer content distribution curve of the final elastomeric copolymer, these curves may show two, three or more maxima or at least be distinctly broadened when compared with curves for the individual fractions. Such a polymer, produced in two, three or more sequential steps, is called bimodal, trimodal or multimodal, depending on the number of steps.

The properties of the elastomeric propylene copolymer mainly influence the xylene cold soluble content as well as the amorphous phase of the final heterophasic polypropylene copolymer. Thus according to the present invention the amorphous phase of the heterophasic propylene copolymer is regarded as the elastomeric propylene copolymer of the heterophasic propylene copolymer.

The xylene cold soluble content includes besides the total amount of elastomeric propylene copolymer dispersed within the matrix also polymer chains of the polypropylene matrix with low molecular weight and low stereoregularity, so that normally the XCS value is slightly higher than the amorphous (AM) value.

The trimodal elastomeric propylene copolymer comprises

(x) a first ethylene/propylene copolymer fraction (EPR1)

(y) a second ethylene/propylene copolymer fraction (EPR2)

(z) a third ethylene/propylene copolymer fraction (EPR3),

wherein

- the first ethylene/propylene copolymer fraction comprises 15 to 35 wt% of ethylene, preferably 20 to 30 wt% of ethylene comonomer and an intrinsic viscosity of the amorphous phase of 2 to 4 dl/g according to ISO 1628-1 (in tetraline at 135°C);
- the first ethylene/propylene copolymer fraction differs from the second and the third ethylene/polypropylene copolymer fraction by the comonomer content and/or the intrinsic viscosity of the amorphous phase, whereby the second ethylene/propylene copolymer has a higher comonomer content (wt%) compared to the first ethylene/propylene copolymer and the third ethylene/propylene copolymer has a higher comonomer content than the second ethylene/propylene copolymer.

According to the invention EPR1 is a propylene rich fraction and EPR3 is an ethylene rich fraction comprising 56 to 85 wt% of ethylene, thus EPR2 comprises propylene and ethylene in at least approximately equal amounts, e.g. 45 to 64 wt% of propylene and 55 to 36 wt% of ethylene, preferably 50 to 64 wt% of propylene and 50 to 36 wt% of ethylene.

Particular good results are achievable in case the ethylene/propylene copolymer fractions EPR1, EPR2 and EPR3 are present in specific amounts.

Thus it is preferred that the trimodal elastomeric propylene copolymer comprises

(x) 40 to 80 wt%, preferably 60 to 75 wt% of EPR1

(y) 10 to 35 wt%, preferably 15 to 30 wt% of EPR2 and

(z) 5 to 30 wt%, preferably 10 to 30 wt% of EPR3,

the sum of (x) + (y) + (z) being 100%.

The heterophasic propylene copolymer comprising the polypropylene matrix and the trimodal elastomeric propylene copolymer as defined above is characterized by a xylene cold soluble fraction at room temperature being present in an amount of 20 to 80 wt% of the heterophasic propylene copolymer.

Preferably the XCS fraction is present in an amount of 30 to 70 wt% and more preferably in an amount of 35 to 60 wt% of the heterophasic propylene copolymer.

Furthermore the amorphous phase of the XCS fraction of the heterophasic propylene copolymer has an intrinsic viscosity measured according to ISO 1628-1 (at 135°C in tetraline) of at least 2.5 dl/g, preferably at least 2.6 dl/g up to 5.0 dl/g, preferably up to 4.0 dl/g.

The heterophasic propylene copolymer of the present invention is further featured by a flexural modulus according to ISO 178 of lower than 800 MPa, preferably lower than 700 MPa, more preferably lower than 600 MPa and most preferably lower than 500 MPa.

The desired heterophasic propylene copolymer is also thermo-mechanically stable. Accordingly the heterophasic propylene copolymer has a melting point of at least 155°C, preferably at least 158°C and more preferably of at least 160°C up to 170°C.

The total ethylene comonomer content of the heterophasic propylene copolymer is within the range of 10 to 35 wt%, preferably 13 to 25 wt%.

The $MFR_2$ of the final heterophasic propylene copolymer is in the range of 0.3 to 30 g/10 min, preferably in the range of 0.5 to 25 g/10 min and more preferably in the range of 1 to 20 g/10 min.

If desired, the final heterophasic propylene copolymer can be visbroken according to known techniques in order to reach a higher $MFR_2$ value suited for the selected application of the heterophasic propylene copolymer.

The chemical degradation of the polymer (visbreaking) is carried out in the presence of free radical initiators, such as peroxides. Examples of radical initiators that can be used for this purpose are 2,5-dimethyl-2,5-di(tert-butylperoxide)-hexane and dicumyl-peroxide. The degradation treatment is carried out by using the appropriate quantities of free radical initiators, and preferably takes place in an inert atmosphere, such as nitrogen. Methods, apparatus, and operating conditions known in the art can be used to carry out this process.

The $MFR_2$ after visbreaking can be in the range from 10 to 50 g/10 min, preferably from 15 to 45 g/10 min and more preferably from 20 to 40 g/10 min.

Additionally it is preferred that the heterophasic propylene copolymer of the present invention has a rather high impact strength measured according to Charpy impact test according to ISO 179 (1eA) at 23°C of at least 50 kJ/$m^2$, more preferably of at least 60 kJ/$m^2$, even more preferably of at least 70 kJ/$m^2$ and most preferably of at least 75 kJ/$m^2$. The impact strength according to Charpy impact test according to ISO 179 (1eA) at -20°C is preferably at least 30 kJ/$m^2$, more preferably of at least 35 kJ/$m^2$, even more preferably of at least 40 kJ/$m^2$ and most preferably of at least 45 kJ/$m^2$.

The heterophasic propylene copolymer of the present invention is furthermore featured by excellent process properties, i.e. the copolymer is non-sticky and causes no reactor fouling.

The heterophasic propylene copolymer of the present invention as defined above may contain up to 2.0 wt% of additives commonly employed in the polyolefin field, like antioxidants, light stabilizers, nucleating agents, slip agents, colorants and fillers.

The main application of the heterophasic propylene copolymer of the invention is the production of films, particularly soft films, extruded articles such as tubes and moulded articles, particularly injection-moulded items. The injection-moulded articles comprising the heterophasic propylene copolymer of the invention have good flexibility and excellent impact properties at low temperature.

The heterophasic propylene copolymer as defined above is preferably produced by a sequential polymerisation process as defined below.

In such sequential polymerisation process the propylene matrix is produced in at least one slurry reactor and subsequently the elastomeric copolymer is produced in at least three gas phase reactors.

Accordingly the present invention is further directed to a sequential polymerisation process for producing a heterophasic propylene copolymer according to the present invention, said heterophasic propylene copolymer comprises a propylene matrix and a trimodal elastomeric propylene copolymer dispersed in said matrix, wherein said process comprises the steps of

- polymerising propylene and optionally an ethylene comonomer in a first slurry reactor obtaining as slurry reactor product the propylene homo- or copolymer matrix
- transferring the slurry reactor product into a 1st GPR
- producing a first ethylene/propylene-copolymer fraction in the propylene matrix in said 1st GPR
- transferring the 1st GPR product into a 2nd GPR
- producing a second ethylene/propylene-copolymer fraction in the presence of said 1st GPR product in said 2nd GPR,
- transferring the 2nd GPR product into a 3rd GPR
- producing a third ethylene/propylene-copolymer fraction in the presence of said 2nd GPR product in said 3rd GPR,
- said 1st, 2nd and 3rd ethylene/propylene mixtures have different compositions and
- recovering the heterophasic propylene copolymer for further processing.

For preferred embodiments of the heterophasic propylene copolymer, the polypropylene matrix, the first ethylene/propylene-copolymer fraction (EPR1), the second ethylene/propylene-copolymer fraction (EPR2), and the third ethylene/propylene-copolymer fraction (EPR3), reference is made to the definitions given above.

The term "sequential polymerisation process" indicates that the heterophasic propylene copolymer is produced in at least four reactors connected in series. Accordingly the present process comprises at least a first slurry reactor, a first gas phase reactor, a second gas phase reactor and a third gas phase reactor.

The first slurry reactor can be any continuous or simple stirred batch tank reactor or loop reactor operating in bulk or slurry. Bulk means a polymerisation in a reaction medium that comprises of at least 60 % (w/w) monomer. According to the present invention the slurry reactor is preferably a (bulk) loop reactor.

The second reactor, the third reactor and the fourth reactor are gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

A preferred sequential polymerisation process is a "loop-gas phase"-process, such as developed by Borealis (known as BORSTAR® technology) described e.g. in patent literature, such as in EP 0 887 379, WO 92/12182, WO 99/24478, WO 99/24479 or in WO 00/68315.

A further suitable slurry-gas phase process is the Spheripol® process of Basell.

With respect to the above-mentioned preferred slurry-gas phase process, the following general information can be provided with respect to the process conditions.

Temperature of from 40°C to 110°C, preferably between 50°C and 100°C, in particular between 60°C and 90°C, with a pressure in the range of from 20 to 80 bar, preferably 30 to 60 bar, with the option of adding hydrogen in order to control the molecular weight in a manner known per se.

The reaction product of the slurry polymerisation, which preferably is carried out in a loop reactor, is then transferred to the subsequent gas phase reactor, wherein the temperature preferably is within the range of from 50°C to 130°C, more preferably 60°C to 100°C, at a pressure in the range of from 5 to 50 bar, preferably 8 to 35 bar, again with the option of adding hydrogen in order to control the molecular weight in a manner known per se.

The residence time can vary in the reactor zones identified above. In one embodiment, the residence time in the slurry reactor, for example a loop reactor, is in the range of from 0.5 to 5 hours, for example 0.5 to 2 hours, while the residence time in the gas phase reactor generally will be from 1 to 8 hours.

If desired, the polymerisation may be effected in a known manner under supercritical conditions in the slurry, preferably loop reactor, and/or as a condensed mode in the gas phase reactor.
Preferably the process comprises also a prepolymerisation step.
In a preferred embodiment, the prepolymerisation is conducted as bulk slurry polymerisation in liquid propylene, i.e. the liquid phase mainly comprises propylene, with minor amount of other reactants and optionally inert components dissolved therein.
The prepolymerisation reaction is typically conducted at a temperature of 0 to 50 °C, preferably from 10 to 45 °C, and more preferably from 15 to 40 °C.
The pressure in the prepolymerisation reactor is not critical but must be sufficiently high to maintain the reaction mixture in liquid phase. Thus, the pressure may be from 20 to 100 bar, for example 30 to 70 bar.
According to the present invention the heterophasic polypropylene copolymer is obtained in a sequential polymerisation process, as described above, in the presence of a catalyst system comprising a Ziegler-Natta procatalyst (r), an organometallic cocatalyst (s) and an external donor (t).
The Ziegler-Natta procatalyst (r) used according to the present invention is typically a stereospecific, high yield Ziegler-Natta procatalyst comprising as essential component a solid transition metal component. This type of procatalysts comprise, as described in detail below, in addition to the solid transition metal (like Ti) component a cocatalyst(s) (s) as well external donor(s) (t) as stereoregulating agent.
The solid transition metal component preferably comprises a magnesium halide and a transition metal compound. These compounds may be supported on a particulate support, such as inorganic oxide, like silica or alumina, or, usually, the magnesium halide itself may form the solid support. Examples of such catalysts are disclosed, among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754 and WO 2004/029112.
It is also possible that solid catalysts are self supported, i.e. the catalysts are not supported on an external support, but are prepared via emulsion-solidification technology, as described for example in WO 03/000757, WO 03/000754 and WO 2004/029112.
In addition to the magnesium halide and transition metal compound the solid transition metal component usually also comprises an electron donor (internal electron donor). Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4347160, US 4382019, US 4435550, US 4465782, US 4473660, US 4530912 and US 4560671.
Preferably the Ziegler-Natta procatalyst (r) used for the present invention is a Ziegler-Natta procatalyst, which contains a trans-esterification product of a $C_1$-$C_2$-alcohol and a phthalic ester as internal donor and which is optionally modified with a vinyl compound of formula $CH_2$=CH-$CHR^1R^2$, wherein $R^1$ and $R^2$ together form a 5- or 6-membered saturated, unsaturated or aromatic ring or independently represent an alkyl group comprising 1 to 4 carbon atoms.
Such a preferred procatalyst (r) used according to the invention is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

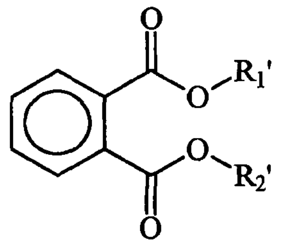
(I)

wherein $R_1'$ and $R_2'$ are independently at least a $C_5$ alkyl
under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566.
First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier. In the next step the spray crystallized or emulsion solidified adduct of the formula $MgCl_2$*nROH, wherein R is methyl or ethyl, preferably ethyl and n is 1 to 6, is contacting with $TiCl_4$ to form a titanised carrier, followed by the steps of

- adding to said titanised carrier

  (i) a dialkylphthalate of formula (I) with $R_1'$ and $R_2'$ being independently at least a $C_5$-alkyl, like at least a $C_8$-alkyl, or preferably
  (ii) a dialkylphthalate of formula (I) with $R_1'$ and $R_2'$ being the same and being at least a $C_5$-alkyl, like at least a $C_8$-alkyl
  or more preferably
  (iii) a dialkylphthalate of formula (I) selected from the group consisting of propylhexylphthalate (PrHP), di(ethylhexyl)phthalate (DOP), di-isodecylphthalate (DIDP), and ditridecylphthalate (DTDP), yet more preferably the dialkylphthalate of formula (I) is di(ethylhexyl)phthalate (DOP) or di-iso-octylphthalate, in particular diethylhexylphthalate,
  to form a first product

- subjecting said first product to suitable transesterification conditions, i.e. to a temperature between 100 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

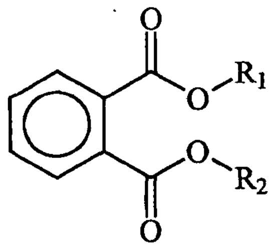

(II)

  with $R_1$ and $R_2$ being methyl or ethyl, preferably ethyl,
  the dialkylphthalat of formula (II) being the internal donor and
- recovering said transesterification product as the procatalyst composition.

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.
This crystallized adduct is preferably used as the catalyst carrier and reacted to the procatalyst useful in the present invention as described in WO 92/19658 and WO 92/19653.
The transesterification is performed at a temperature above 100°C, advantageously between 130 to 150 °C.
As the catalyst residue is removed by extracting, an adduct of the titanised carrier and the internal donor is obtained, in which the group deriving from the ester alcohol has changed.
In case sufficient titanium remains on the carrier, it will act as an active element of the procatalyst.
Otherwise the titanization is repeated after the above treatment in order to ensure a sufficient titanium concentration and thus activity.
Preferably the procatalyst used according to the invention contains 2.5% by weight of titanium at the most, preferably 2.2% by weight at the most and more preferably 2.0 % by weight at the most. Its donor content is preferably between 4 to 12% by weight and more preferably between 6 and 10 % by weight.
More preferably the procatalyst used according to the invention has been produced by using ethanol as the alcohol and di(ethylhexyl)phthalate (DOP) as dialkylphthalate of formula (I), yielding diethyl phthalate (DEP) as the internal donor compound.
Still more preferably the catalyst used according to the invention is a catalyst prepared according to WO92/19653 as disclosed in WO 99/24479; especially with the use of di(ethylhexyl)phthalate as dialkylphthalate of formula (I) according to WO 92/19658) or the catalyst Polytrack 8502, commercially available from Grace.
The Ziegler-Natta procatalyst suitable for producing the heterophasic polypropylene copolymer according to the invention is preferably modified by prepolymerising it with a vinyl compound of the formula:

$CH_2=CH-CHR^1R^2$

wherein $R^1$ and $R^2$ together form a 5- or 6-membered saturated, unsaturated or aromatic ring or independently represent an alkyl group comprising 1 to 4 carbon atoms, and the modified catalyst is used for the preparation of the polymer composition. The polymerised vinyl compound can act as a nucleating agent.

The vinyl compound suitable for modifying the procatalyst is preferably selected from vinyl cyclohexene, vinyl cyclopentane, vinyl-2-methyl cyclohexene and vinyl norbornane, 3-methyl-1-butene, styrene, p-methyl-styrene, 3-ethyl-1-hexene or mixtures thereof.

Concerning the modification of the procatalyst reference is made to the international applications WO 99/24478, WO 99/24479, WO 99/24503 and particularly WO 00/68315, incorporated herein by reference with respect to the reaction conditions concerning the modification of the catalyst as well as with respect to the polymerisation reaction.

For the production of the heterophasic polypropylene copolymers according to the invention the catalyst system used comprises in addition to the Ziegler-Natta procatalyst (r), as described above, an organometallic cocatalyst (s).

The organometallic compound is preferably an organoaluminium compound selected from the group consisting of trialkylaluminium, like triethylaluminium (TEA), triisobutylaluminium, tri-n-butylaluminium; dialkyl aluminium chloride, like dimethyl- or diethyl aluminium chloride; and alkyl aluminium sesquichloride. More preferably the cocatalyst is triethylaluminium or diethylaluminium chloride, most preferably triethylaluminium is used as cocatalyst.

Furthermore the catalysts system used comprises as external donor preferably an external donor represented by formula (III)

$Si(OCH_2CH_3)_3(NR^3R^4)$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. More preferably both $R^1$ and $R^2$ are the same, yet more preferably both $R^3$ and $R^4$ are an ethyl group.

Most preferably diethylaminotriethoxysilane is used as external donor.

The external donor may be produced according to the methods disclosed in EP 1538 167. The content of this document is herein included by reference.

The catalyst components can be all introduced to the prepolymerisation step.

However, where the procatalyst and the cocatalyst can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is possible to add other components also to the prepolymerisation stage. Thus, hydrogen may be added into the prepolymerisation stage to control the molecular weight of the prepolymer as is known in the art. Further, antistatic additive may be used to prevent the particles from adhering to each other or to the walls of the reactor.

According to a preferred embodiment of the present invention no external donor is added to the prepolymerisation reactor, to the slurry polymerisation reactor and to the third gas phase reactor.

In this case the external donor is fed to the first and to the second gas phase reactor in order to control the production rate. The ratio of amount of external donor fed to the first GPR to the amount of external donor fed to the second GPR is in the range of 2.5 to 6 (wt-ppm), preferably in the range of 2.8 to 5.5 (wt-ppm) and more preferably in the range of 3.0 to 5.0 (wt-ppm).

As alternative, a small amount of the total amount of external donor can be fed to the prepolymerisation reactor or to the slurry reactor and the remaining amount is fed to the first and second GPR with a wt-ppm ratio in the range of 2.5 to 6. Such a small amount is preferably in the range of 0.5 to 10 wt% of the total amount, preferably in the range of 1 to 5 wt% of the total amount.

Additives, as defined above, are added to the heterophasic polypropylene copolymer, which is collected from the final reactor of the series of reactors. Preferably, these additives are mixed into the composition prior to or during the extrusion process in a one-step compounding process. Alternatively, a master batch may be formulated, wherein the heterophasic propylene copolymer is first mixed with only some of the additives.

For mixing, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection moulding to generate articles and products of the inventive heterophasic propylene copolymers.

Heterophasic propylene copolymers according to the invention may be pelletized and compounded using any of the variety of compounding and blending methods well known and commonly used in the resin compounding art.

**EXAMPLES:**

**A. METHODS**

**Melt Flow Rate ($MFR_2$)**

The melt flow rates were measured with a load of 2.16 kg ($MFR_2$) at 230 °C. The melt flow rate is that quantity of polymer in grams which the test apparatus standardized to ISO 1133 extrudes within 10 minutes at a temperature of 230 °C under a load of 2.16 kg.

**Comonomer content**

The comonomer contents of the copolymer was determined by quantitative Fourier transform infrared spectroscopy (FTIR) calibrated to results obtained from quantitative $^{13}C$ NMR spectroscopy.
When measuring the ethylene content in polypropylene, a thin film of the sample (thickness about 250 mm) was prepared by hot-pressing. The area of $-CH_2-$ absorption peak (800-650 $cm^{-1}$) was measured with Perkin Elmer FTIR 1600 spectrometer.
The comonomer content C was determined using a film thickness method using the intensity of the quantitative band I(q) and the thickness of the pressed film T using the following relationship: [I(q) / T]m + c = C where m and c are the coefficients determined from the calibration curve constructed using the comonomer contents obtained from $^{13}C$ NMR spectroscopy.

**Xylene cold soluble fraction (XCS wt%)**

The xylene cold soluble fraction (XCS) is determined at 23 °C according to ISO 6427.
**The amorphous content (AM)** is measured by separating the above xylene cold soluble fraction (XCS) and precipitating the amorphous part with acetone. The precipitate was filtered and dried in a vacuum oven at 90 °C.

$$AM\% = \frac{100\ x\ m1\ x\ v0}{m0\ x\ v1}$$

wherein

"AM%" is the amorphous fraction,
"m0" is initial polymer amount (g)
"m1" is weight of precipitate (g)
"v0" is initial volume (ml)
"v1" is volume of analyzed sample (ml)

**Melting temperature $T_m$, crystallization temperature $T_c$,** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms (second heat) and exotherms (first cooling).

**Intrinsic viscosity (IV)**

The intrinsic viscosity (IV) value increases with the molecular weight of a polymer. The IV values e.g. of the amorphous phase were measured according to ISO 1628/1 (October 1999) in tetraline at 135°C.
**Flexural modulus** was measured according to ISO 178 by using injection molded test specimens as described in EN ISO 1873-2 (80 x 10 x 4 mm)

**Charpy** notched **impact strength (NIS),**

NIS was determined according to ISO 179-1eA:2000 on V-notched samples of 80x10x4 $mm^3$ at 23 °C (Charpy

notched impact strength (23°C)), and -20 °C (Charpy notched impact strength (-20°C)). The test specimens were prepared by injection moulding using a IM V 60 TECH machinery in line with ISO 1872-2. The melt temperature was 230 °C and the mold temperature was 40 °C.

## B. Examples

All polymers were produced in a Borstar pilot plant with a prepolymerisation reactor, one slurry loop reactor and three gas phase reactors. The catalyst used in the polymerisation process was a catalyst 1.9 wt% Ti-Ziegler-Natta-catalyst prepared according to WO 92/19653 with DOP as dialkylphthalat of the formula (I) and ethanol as alcohol with triethylaluminium (TEA) as co-catalyst and diethylaminotriethoxysilane as donor in the ratios indicated in table 1. Before the polymerisation, the catalyst was prepolymerised with vinylcyclohexane in an amount to achieve a concentration of 200 ppm poly(vinylcyclohexane) (PVCH) in the final polymer. The respective process is described in EP 1 028 984 and EP 1 183 307.

**Table 1:** Preparation of the heterophasic propylene copolymers

| Parameter | unit | IE 1 | IE 2 | IE3 | IE4 | IE5 | IE6 |
|---|---|---|---|---|---|---|---|
| **Prepolymerisation** | | | | | | | |
| temperature | [°C] | 30 | 30 | 30 | 30 | 30 | 30 |
| pressure | [kPa] | 5500 | 5500 | 5500 | 5500 | 5500 | 5500 |
| Al/donor ratio | [mol/mol] | 0 | 0 | 0 | 0 | 0 | 0 |
| residence time | [h] | 0.3 | 0.3 | 0.3 | 0.3 | 0.3 | 0.3 |
| **Loop** | | | | | | | |
| temperature | [°C] | 75 | 75 | 75 | 75 | 75 | 75 |
| pressure | [kPa] | 5400 | 5400 | 5400 | 5400 | 5400 | 5400 |
| residence time | [h] | 0.5 | 0.5 | 0.5 | 0.5 | 0.5 | 0.5 |
| H2/C3 ratio | [mol/kmol] | 20.7 | 23.9 | 25.4 | 28.0 | 28.5 | 28.7 |
| MFR2 | [g/10 min] | 170 | 290 | 340 | 370 | 360 | 380 |
| XCS | [wt%] | 4.0 | 3.1 | 4.0 | 3.5 | 3.4 | 3.2 |
| Split | [wt%] | 54.3 | 51.6 | 51.9 | 50.3 | 46.3 | 47.3 |
| **GPR1** | | | | | | | |
| Donor feed | [g/h] | 30 | 30 | 30 | 30 | 30 | 30 |
| temperature | [°C] | 65 | 65 | 65 | 65 | 65 | 65 |
| pressure | [kPa] | 1500 | 1447 | 1360 | 1360 | 1360 | 1360 |
| residence time | [h] | 1.4 | 1.3 | 1.3 | 1.3 | 1.3 | 1.5 |
| H2/C2 ratio | [mol/kmol] | 120 | 130 | 130 | 130 | 145 | 160 |
| C2/C3 ratio | [mol/kmol] | 180 | 185 | 202 | 195 | 210 | 210 |
| Split | [wt%] | 33.7 | 36.4 | 33.1 | 34.7 | 35.7 | 36.7 |
| XCS | [wt%] | 36.8 | 36.8 | 33.5 | 35.4 | 35.4 | 38.0 |
| AM | [wt%] | 35.1 | 35.1 | 32.4 | 33.0 | 34.1 | 36.2 |
| IV of AM | [dl/g] | 2.6 | 2.5 | 2.4 | 2.4 | 2.4 | 2.3 |
| C2 of AM | [wt%] | 23.3 | 26.2 | 23.3 | 23.3 | 24.4 | 24.4 |
| C2 content | [wt%] | 14.2 | 13.8 | 12.3 | 12.6 | 13.4 | 13.4 |
| **GPR 2** | | | | | | | |
| Donor feed | [g/h] | 10 | 10 | 10 | 10 | 10 | 10 |

(continued)

| **GPR 2** | | | | | | | |
|---|---|---|---|---|---|---|---|
| temperature | [°C] | 70 | 70 | 70 | 70 | 70 | 70 |
| pressure | [kPa] | 2300 | 2300 | 2300 | 2300 | 2300 | 2300 |
| residence time | [h] | 1.08 | 1.14 | 1.16 | 1.14 | 1.37 | 1.41 |
| H2/C2 ratio | [mol/kmol] | 29 | 21 | 32 | 57 | 102 | 101 |
| C2/C3 ratio | [mol/kmol] | 717 | 673 | 661 | 659 | 651 | 659 |
| Split | [wt%] | 8.0 | 8.0 | 10.0 | 9.0 | 11.0 | 8.0 |
| XCS | [wt%] | 40.5 | 40.5 | 40.1 | 40.1 | 40.0 | 40.4 |
| AM | [wt%] | 38.9 | 38.9 | 39.3 | 39.3 | 37.3 | 38.5 |
| IV of AM | [dl/g] | 3.2 | 3.2 | 2.7 | 2.7 | 2.9 | 2.4 |
| C2 of AM | [wt%] | 29.0 | 29.0 | 28.0 | 28.0 | 27.0 | 29.0 |
| C2 content | [wt%] | 14.2 | 13.8 | 12.3 | 12.6 | 13.4 | 13.4 |
| **GPR 3** | | | | | | | |
| temperature | [°C] | 65 | 65 | 65 | 65 | 70 | 70 |
| pressure | [kPa] | 2000 | 2000 | 2000 | 2000 | 2000 | 2000 |
| residence time | [h] | 0.59 | 0.53 | 0.50 | 0.52 | 0.62 | 0.81 |
| H2/C2 ratio | [mol/kmol] | 25 | 20 | 27 | 47 | 66 | 69 |
| C2/C3 ratio | [mol/kmol] | 1024 | 989 | 1077 | 1228 | 1227 | 1207 |
| Split | [wt%] | 4.0 | 4.0 | 5.0 | 6.0 | 7.0 | 8.0 |
| XCS | [wt%] | 42.0 | 41.8 | 43.7 | 43.8 | 42.9 | 46.8 |
| AM | [wt%] | 41.0 | 40.8 | 42.1 | 42.8 | 41.9 | 45.8 |
| IV of AM | [dl/g] | 3.2 | 3.2 | 3.0 | 2.8 | 3.1 | 2.6 |
| C2 of AM | [wt%] | 35.2 | 36.8 | 31.3 | 28.8 | 29.0 | 35.9 |
| C2 content | [wt%] | 14.6 | 16.8 | 16.4 | 16.3 | 17.8 | 18.6 |

The Base resins from IE1 - IE6 contained a unimodal propylene homopolymer matrix and a trimodal rubber.

The products from the 3$^{rd}$ gas phase reactor were mixed with a conventional additive package comprising 0.2 wt/% Irganox B225 (antioxidant masterbatch supplied by Ciba Specialty Chemicals, Switzerland) and 0.05 wt% Ca-Stearate (CAS-No. 1592-23-0). The compositions were homogenized and pelletized in a co-rotating a twin screw extruder (PRISM TSE24 UD ratio 40) with different mixing segments at temperatures between 190 and 240°C at a throughput of 10 kg/h and a screw speed of 50 rpm. The material was extruded to two circular dies of 3 mm diameter into a water bath for strand solidification and then pelletized and dried.

Table 2: Properties of the final product

| Parameter | unit | IE 1 | IE 2 | IE3 | IE4 | IE5 | IE6 |
|---|---|---|---|---|---|---|---|
| PP Mixer $MFR_2$ | [g/10min] | 3.2 | 3.2 | 4.5 | 5.5 | 5.4 | 5.4 |
| PP Mixer XCS | [wt%] | 38.7 | 41.8 | 42.3 | 43.8 | 43.9 | 45.2 |
| PP Mixer AM | [wt%] | 36.5 | 40.7 | 39.9 | 41.2 | 42.8 | 44.7 |
| PP Mixer C2 of AM | [wt%] | 32.8 | 36.8 | 28.6 | 28.8 | 31.3 | 29.5 |
| PP Mixer IV of AM | [dl/g] | 3.3 | 3.2 | 3 | 2.8 | 2.7 | 2.7 |
| PP Mixer C2 total | [wt%] | 15.6 | 17 | 16.3 | 16.8 | 18.1 | 18.8 |
| PP Pellet $MFR_2$ | [g/10min] | 3.5 | 3.3 | 4.6 | 5.7 | 5.5 | 5.8 |

(continued)

| Parameter | unit | IE 1 | IE 2 | IE3 | IE4 | IE5 | IE6 |
|---|---|---|---|---|---|---|---|
| PP Pellet Tm | [°C] | 165.3 | 165.3 | 164.6 | 164.9 | 165.2 | 164.1 |
| PP Pellet Tc | [°C] | 127.3 | 127.5 | 127.9 | 127.5 | 127.3 | 128.6 |

The resins from IE1 to IE3 and IE6 have been further tested. Results can be seen in Table 3.

**Table 3:**

| Parameter | unit | IE 1 | IE 2 | IE3 | IE6 |
|---|---|---|---|---|---|
| Flexural Modulus | MPa | 525 | 432 | 444 | 395 |
| Charpy +23° | $kJ/m^2$ | 84.4 | 84.5 | 83.9 | 78.8 |
| Charpy -20°C | $kJ/m^2$ | 52.0 | 60.3 | 48.2 | 71.2 |

The resin of IE6 was subjected to peroxidic degradation (visbreaking) at 220°C with 2,5-dimethyl-2,5-di(tert-butylperoxy) hexane (DHP from Degussa). The $MFR_2$ was increased up to 30 g/10 min.

**Table 4:** Properties of visbroken polymer of IE6

| | | |
|---|---|---|
| Flexural Modulus | MPa | 380 |
| Charpy +23° | $kJ/m^2$ | 71 |
| Charpy -20°C | $kJ/m^2$ | 63 |

## Claims

**1.** Heterophasic propylene copolymer comprising

a) a propylene homo- or copolymer matrix with an $MFR_2$ of ≥ 150 g/10 min according to ISO 1133 (230°C, 2.16 kg load) and
b) a trimodal elastomeric propylene copolymer dispersed in said matrix, said trimodal elastomeric propylene copolymer being trimodal with respect to the molecular weight distribution (MWD) and/or the comonomer content, wherein

(i) the xylene cold soluble fraction of the heterophasic propylene copolymer at room temperature is present in an amount of 20 to 80 wt% of the heterophasic propylene copolymer, said xylene cold soluble fraction being determined at 23 °C according to ISO 6427.
(ii) the amorphous phase of the xylene cold soluble fraction of the heterophasic propylene copolymer has an intrinsic viscosity measured according to ISO 1628-1 (at 135°C in tetraline) of at least 2.5 dl/g, said xylene cold soluble fraction being determined at 23 °C according to ISO 6427,
(iii) said of the heterophasic propylene copolymer has a flexural modulus lower than 800 MPa according to ISO 178, a melting temperature measured by DSC from 155 to 170°C and a total ethylene content from 10 to 35 wt%.

**2.** Heterophasic propylene copolymer according to claim 1, wherein the matrix of said heterophasic propylene copolymer is a propylene homopolymer with an $MFR_2$ of ≥ 200 g/10 min up to 1000 g/10min according to ISO 1133 (230°C, 2.16 kg load).

**3.** Heterophasic propylene copolymer according to claim 1 or 2, wherein the trimodal elastomeric propylene copolymer comprises

(x) a first ethylene/propylene copolymer fraction (EPR1)
(y) a second ethylene/propylene copolymer fraction (EPR2)
(z) a third ethylene/propylene copolymer fraction (EPR3),

wherein

- the first ethylene/propylene copolymer fraction comprises 15 to 35 wt% of ethylene, preferably 20 to 30 wt% of ethylene comonomer and has an intrinsic viscosity of the amorphous phase of 2 to 4 dl/g according to ISO 1628-1;
- the second ethylene/propylene copolymer has a higher ethylene comonomer content (wt%) compared to the first ethylene/propylene copolymer and the third ethylene/propylene copolymer has a higher ethylene comonomer content than the second ethylene/propylene copolymer.

**4.** Heterophasic propylene copolymer according to claim 3 wherein EPR1 is a propylene rich fraction, EPR3 is an ethylene rich fraction comprising 56 to 85 wt% of ethylene, and EPR2 comprises 55 to 36 wt% of ethylene.

**5.** Heterophasic propylene copolymer according to claim 3 or 4, wherein the trimodal elastomeric propylene copolymer comprises

(x) 40 to 80 wt%, preferably 60 to 75 wt% of EPR1
(y) 10 to 35 wt%, preferably 15 to 30 wt% of EPR2 and
(z) 5 to 30 wt%, preferably 10 to 30 wt% of EPR3,

the sum of (x) + (y) + (z) being 100%.

**6.** Heterophasic propylene copolymer according to any of preceding claims 1 to 5, wherein

(i) the xylene cold soluble fraction of said heterophasic propylene copolymer at room temperature is present in an amount of 30 to 70 wt% of the of the heterophasic propylene copolymer, said xylene cold soluble fraction being determined at 23 °C according to ISO 6427,
(ii) the amorphous phase of the xylene cold soluble fraction of the heterophasic propylene copolymer has an intrinsic viscosity measured according to ISO 1628-1 (at 135°C in tetraline) of at least 2.6 dl/g up to 5.0 dl/g, said xylene cold soluble fraction being determined at 23 °C according to ISO 6427,
(iii) said of the heterophasic propylene copolymer has a flexural modulus lower than 700 MPa according to ISO 178, a melting temperature measured by DSC from 158 to 170°C, an $MFR_2$ in the range of 0.3 g/10 min to 30 g/10min according to ISO 1133 (230°C, 2.16 kg load) and a total ethylene content from 13 to 25 wt%.

**7.** Heterophasic propylene copolymer according to any of preceding claims 1 to 5, wherein said heterophasic propylene copolymer has a Charpy notched impact strength according to ISO 179 (1eA) at 23°C of at least 50 $kJ/m^2$, and a Charpy notched impact strength according to ISO 179 (1eA) at -20°C of at least 30 $kJ/m^2$.

**8.** Process for the preparation of a heterophasic propylene copolymer according to any of preceding claims 1 to 7 said heterophasic propylene copolymer comprises a propylene matrix and a trimodal elastomeric propylene copolymer dispersed in said matrix, wherein said process comprises the steps of

- polymerising propylene and optionally an ethylene comonomer in a first slurry reactor obtaining as slurry reactor product the propylene homo- or copolymer matrix
- transferring the slurry reactor product into a $1^{st}$ GPR
- producing a first ethylene/propylene-copolymer fraction in the propylene matrix in said $1^{st}$ GPR
- transferring the $1^{st}$ GPR product into a $2^{nd}$ GPR
- producing a second ethylene/propylene-copolymer fraction in the presence of said $1^{st}$ GPR product in said $2^{nd}$ GPR,
- transferring the $2^{nd}$ GPR product into a $3^{rd}$ GPR
- producing a third ethylene/propylene-copolymer fraction in the presence of said $2^{nd}$ GPR product in said $3^{rd}$ GPR,
- said $1^{st}$, $2^{nd}$ and $3^{rd}$ ethylene/propylene mixtures have different compositions and
recovering the heterophasic propylene copolymer for further processing,
said process being performed in the presence of a catalyst system comprising
- a Ziegler-Natta procatalyst (r) and
- an organometallic cocatalyst (s) and
- an external donor (t) represented by formula (III)

$Si(OCH_2CH_3)_3(NR^3R^4)$

wherein $R^3$ and $R^4$ can be the same or different a represent a hydrocarbon group having 1 to 12 carbon atoms;

**9.** Process according to claim 8, wherein the procatalyst used is a Ziegler-Natta procatalyst, which contains a trans-esterification product of a $C_1$-$C_2$-alcohol and a phthalic ester as internal donor and which is optionally modified with a vinyl compound of formula $CH_2$=CH-$CHR^1R^2$,
wherein $R^1$ and $R^2$ together form a 5- or 6-membered saturated, unsaturated or aromatic ring or independently represent an alkyl group comprising 1 to 4 carbon atoms.

**10.** Process according to claim 9, wherein the procatalyst used has been prepared by

a) reacting a spray crystallized or emulsion solidified adduct of $MgCl_2$ and a $C_1$-$C_2$-alcohol with $TiCl_4$
b) reacting the product of stage a) with a dialkylphthalate of formula (I)

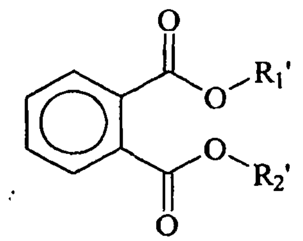

(I)

wherein $R_1$' and $R_2$' are independently at least a $C_5$-alkyl
under conditions where a transesterification between said $C_1$-$C_2$-alcohol and said dialkylphthalate of formula (I) takes place to form the internal donor
c) washing the product of stage b) and
d) optionally reacting the product of step c) with $TiCl_4$.

**11.** Process according to claim 10, **characterized in that** the dialkylphthalate of formula (I) is di(ethylhexyl)phthalate and that the $C_1$-$C_2$-alcohol is ethanol.

**12.** Process according to anyone of the preceding claims 8 to 11, wherein the Ziegler-Natta procatalyst is used in the presence of an organometallic cocatalyst selected from the group consisting of trialkylaluminium, dialkyl aluminium chloride and alkyl aluminium sesquichloride.

**13.** Process according to claim 12, **characterized in that** the cocatalyst is triethylaluminium or diethylaluminium chloride.

**14.** Process according to anyone of the preceding claims 8 to 13, wherein the Ziegler-Natta procatalyst is used in the presence of diethylaminotriethoxysilane as external donor.

**15.** Process according to anyone of the preceding claims 8 to 14 wherein the vinyl compound suitable for modifying the procatalyst is selected from vinyl cyclohexene, vinyl cyclopentane, vinyl-2-methyl cyclohexene and vinyl norbornane, 3-methyl-1-butene, styrene, p-methyl-styrene, 3-ethyl-1-hexene or mixtures thereof.

**16.** Process according to anyone of the preceding claims 8 to 15, wherein the process includes a prepolymerisation step.

**17.** Process according to any of preceding claims 8 to 16, wherein the external donor is only fed to the first and to the second gas phase reactor in order to control the production rate with a ratio of amount of external donor fed to the first GPR to the amount of external donor fed to the second GPR is in the range of 2.5 to 6 (wt-ppm).

**18.** Process according to any of preceding claims 8 to 17, wherein a small amount of the total amount of external donor in the range of 0.5 to 10 wt% of the total amount of external donor is fed to the prepolymerisation reactor or to the slurry reactor and the remaining amount is fed to the first and second GPR with a wt-ppm ratio in the range of 2.5 to 6.

## Patentansprüche

1. Heterophasisches Propylen-Copolymer, enthaltend

   a) eine Propylen-Homo- oder -Copolymer-Matrix mit einem $MFR_2$ von ≥ 150 g/10 min gemäß ISO 1133 (230 °C, 2,16 kg Last) und
   b) ein in der Matrix dispergiertes trimodales elastomeres Propylen-Copolymer, wobei das trimodale elastomere Propylen-Copolymer trimodal in Bezug auf die Molekulargewichtsverteilung (MWD) und/oder den Comonomergehalt ist,
   wobei

   (i) die Xylol-kaltlösliche Fraktion des heterophasischen Propylen-Copolymers bei Raumtemperatur in einer Menge von 20 bis 80 Gewichtsprozent des heterophasischen Propylen-Copolymers vorhanden ist, wobei die Xylol-kaltlösliche Fraktion bei 23 °C gemäß ISO 6427 bestimmt wird,
   (ii) die amorphe Phase der Xylol-kaltlöslichen Fraktion des heterophasischen Propylen-Copolymers eine gemäß ISO 1628-1 (bei 135 °C in Tetralin) gemessene intrinsische Viskosität von wenigstens 2,5 dl/g aufweist, wobei die Xylol-kaltlösliche Fraktion bei 23 °C gemäß ISO 6427 bestimmt wird,
   (iii) das heterophasische Propylen-Copolymer einen Biege-E-Modul gemäß ISO 178 kleiner als 800 MPa, eine durch DSC gemessene Schmelztemperatur von 155 bis 170 °C und einen Gesamtethylengehalt von 10 bis 35 Gewichtsprozent aufweist.

2. Heterophasisches Propylen-Copolymer nach Anspruch 1, bei dem die Matrix des heterophasischen Propylen-Copolymers ein Propoylen-Homopolymer mit einem $MFR_2$ von ≥ 200 g/10 min bis zu 1000 g/10 min gemäß ISO 1133 (230 °C, 2,16 kg Last) ist.

3. Heterophasisches Propylen-Copolymer nach Anspruch 1 oder 2, bei dem das trimodale elastomere Propylen-Copolymer umfasst:

   (x) eine erste Ethylen/Propylen-Copolymerfraktion (EPR1),
   (y) eine zweite Ethylen/Propylen-Copolymerfraktion (EPR2),
   (z) eine dritte Ethylen/Propylen-Copolymerfraktion (EPR3),
   wobei

   - die erste Ethylen/Propylen-Copolymerfraktion 15 bis 35 Gewichtsprozent Ethylen, vorzugsweise 20 bis 30 Gewichtsprozent Ethylen-Comonomer umfasst und eine intrinsische Viskosität der amorphen Phase von 2 bis 4 dl/g gemäß ISO 1628-1 aufweist,
   - das zweite Ethylen/Propylen-Copolymer einen höheren Ethylen-Comonomergehalt (Gewichtsprozent) verglichen mit dem ersten Ethylen/Propylen-Copolymer aufweist und das dritte Ethylen/Propylen-Copolymer einen höheren Ethylen-Comonomergehalt als das zweite Ethylen/Propylen-Copolymer aufweist.

4. Heterophasisches Propylen-Copolymer nach Anspruch 3, bei dem EPR1 eine an Propylen reiche Fraktion ist, EPR3 eine an Ethylen reiche Fraktion ist, die 56 bis 85 Gewichtsprozent an Ethylen umfasst, und EPR2 55 bis 36 Gewichtsprozent an Ethylen aufweist.

5. Heterophasisches Propylen-Copolymer nach Anspruch 3 oder 4, bei dem das trimodale elastomere Propylen-Copolymer umfasst:

   (x) 40 bis 80 Gewichtsprozent, vorzugsweise 60 bis 75 Gewichtsprozent an EPR1,
   (y) 10 bis 35 Gewichtsprozent, vorzugsweise 15 bis 30 Gewichtsprozent an EPR2 und
   (z) 5 bis 30 Gewichtsprozent, vorzugsweise 10 bis 30 Gewichtsprozent an EPR3,
   wobei die Summe an (x) + (y) + (z) 100 % beträgt.

6. Heterophasisches Propylen-Copolymer nach einem der vorherigen Ansprüche 1 bis 5, bei dem

   (i) die Xylol-kaltlösliche Fraktion des heterophasischen Propylen-Copolymers bei Raumtemperatur in einer Menge von 30 bis 70 Gewichtsprozent des heterophasischen Propylen-Copolymers vorhanden ist, wobei die Xylol-kaltlösliche Fraktion bei 23 °C gemäß ISO 6427 bestimmt wird,
   (ii) die amorphe Phase der Xylol-kaltlöslichen Fraktion des heterophasischen Propylen-Copolymers eine gemäß

ISO 1628-1 (bei 135 °C in Tetralin) gemessene intrinsische Viskosität von wenigstens 2,6 dl/g bis zu 5,0 dl/g aufweist, wobei die Xylol-kaltlösliche Fraktion bei 23 °C gemäß ISO 6427 bestimmt wird,
(iii) das heterophasische Propylen-Copolymer einen Biege-E-Modul gemäß ISO 178 kleiner als 700 MPa, eine durch DSC gemessene Schmelztemperatur von 158 bis 170 °C und einen Gesamtethylengehalt von 13 bis 25 Gewichtsprozent aufweist.

**7.** Heterophasisches Propylen-Copolymer nach einem der vorherigen Ansprüche 1 bis 5, bei dem das heterophasische Propylen-Copolymer eine Charpy-Kerbschlagzähigkeit gemäß ISO 179 (1eA) bei 23 °C von wenigstens 50 $kJ/m^2$ und eine Charpy-Kerbschlagzähigkeit gemäß ISO 179 (1eA) bei -20 °C von wenigstens 30 $kJ/m^2$ aufweist.

**8.** Verfahren zur Herstellung eines heterophasischen Propylen-Copolymers nach einem der vorherigen Ansprüche 1 bis 7, wobei das heterophasische Propylen-Copolymer eine Propylen-Matrix und ein in der Matrix dispergiertes trimodales elastomeres Propylen-Copolymer umfasst, wobei das Verfahren die folgenden Schritte umfasst:

- Polymerisieren von Propylen und gegebenenfalls ein Ethylen-Comonomer in einem ersten Slurry-Reaktor, wobei als Slurry-Reaktorprodukt die Propylen-Homo- oder -Copolymer-Matrix erhalten wird,
- Übertragen des Slurry-Reaktorprodukts in einen ersten GPR (Gas-Phasen Reaktor),
- Erzeugen einer ersten Ethylen/Propylen-Copolymerfraktion in der Propylen-Matrix im ersten GPR,
- Übertragen des ersten GPR-Produkts in einen zweiten GPR,
- Erzeugen einer zweiten Ethylen/Propylen-Copolymerfraktion in der Gegenwart des ersten GPR-Produkts im zweiten GPR,
- Übertragen des zweiten GPR-Produkts in einen dritten GPR,
- Erzeugen einer dritten Ethylen/Propylen-Copolymerfraktion in der Gegenwart des zweiten GPR-Produkts im dritten GPR,
- wobei die erste, zweite und dritte Ethylen/Propylen-Mischung unterschiedliche Zusammensetzungen aufweisen,
- Gewinnen des heterophasischen Propylen-Copolymers zur weiteren Verarbeitung,

wobei das Verfahren in der Gegenwart eines Katalysatorsystems ausgeführt wird, umfassend:
- einen Ziegler-Natta-Prokatalysator (r) und
- einen organimetallischen Kokatalysator (s) und
- einen externen Donor (t), der durch die Formel (III) repräsentiert wird

$$Si(OCH_2CH_3)_3(NR^3R^4)$$

wobei $R^3$ und $R^4$ gleich oder unterschiedlich sein können und eine Kohlenwasserstoffgruppe mit 1 bis 12 Kohlenstoffatomen repräsentieren.

**9.** Verfahren nach Anspruch 8, bei dem der verwendete Prokatalysator ein Ziegler-Natta-Prokatalysator ist, der ein Umesterungsprodukt eines $C_1$-$C_2$-Alkohols und eines Phthalsäureesters als internen Donor enthält und der wahlweise mit einer Vinylverbindung der Formel $CH_2=CH-CHR^1R^2$ modifiziert ist, wobei $R^1$ und $R^2$ zusammen einen 5- oder 6-gliedrigen gesättigten, ungesättigten oder aromatischen Ring bilden oder unabhängig eine Alkylgruppe repräsentieren, die 1 bis 4 Kohlenstoffatome enthalten.

**10.** Verfahren nach Anspruch 9, bei dem der verwendete Prokatalysator hergestellt wurde durch

a) Reagieren eines sprühkristallisierten oder emulsionsverfestigten Addukts von $MgCl_2$ und einem $C_1$-$C_2$-Alkohol mit $TiCl_4$,
b) Umsetzen des Produkts aus Schritt a) mit einem Dialkylphthalat der Formel (I)

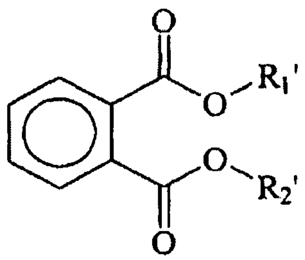

(I)

wobei $R_1$' und $R_2$' unabhängig voneinander wenigstens ein $C_5$-Alkyl sind,
unter Bedingungen, bei denen eine Umesterung zwischen dem $C_1$-$C_2$-Alkohol und dem Dialkylphthalat der Formel (I) stattfindet, um den internen Donor zu bilden,
c) Waschen des Produkts aus Schritt b) und
d) gegebenenfalls Umsetzen des Produkts aus Schritt c) mit $TiCl_4$.

**11.** Verfahren nach Anspruch 10, bei dem das Dialkylphthalat der Formel (I) Di(ethylhexyl)phthalat ist und der $C_1$-$C_2$-Alkohol Ethanol ist.

**12.** Verfahren nach einem der vorherigen Ansprüche 8 bis 11, bei dem der Ziegler-Natta-Prokatalysator in der Gegenwart eines organometallischen Kokatalysators verwendet wird, ausgewählt aus der Gruppe, die aus Trialkylaluminium, Dialkylaluminiumchlorid und Alkylaluminiumsesquichlorid besteht.

**13.** Verfahren nach Anspruch 12, **dadurch gekennzeichnet, dass** der Kokatalysator Triethylaluminium oder Diethylaluminiumchlorid ist.

**14.** Verfahren nach einem der vorherigen Ansprüche 8 bis 13, bei dem der Ziegler-Natta-Prokatalysator in der Gegenwart von Diethylaminotriethoxysilan als externem Donor verwendet wird.

**15.** Verfahren nach einem der vorherigen Ansprüche 8 bis 14, bei dem die zur Modifizierung des Prokatalysators geeignete Vinylverbindung aus Vinylcyclohexaan, Vinylcyclopentan, Vinyl-2-methylcyclohean und Vinylnorbornan, 3-Methyl-1-buten, Styrol, p-Methylstyrol, 3-Ethyl-1-hexen oder Mischungen daraus ausgewählt ist.

**16.** Verfahren nach einem der vorherigen Ansprüche 8 bis 15, bei dem das Verfahren einen Präpolymerisationsschritt umfasst.

**17.** Verfahren nach einem der vorherigen Ansprüche 8 bis 16, bei dem der externe Donor nur dem ersten und dem zweiten Gasphasenreaktor zugeführt wird, um die Produktionsrate zu steuern, wobei ein Verhältnis der Menge des dem ersten GPR zugeführten externen Donors zu der Menge des dem zweiten GPR zugeführten externen Donors im Bereich von 2,5 bis 6 (Gewichts-ppm) liegt.

**18.** Verfahren nach einem der vorherigen Ansprüche 8 bis 17, bei dem eine kleine Menge der Gesamtmenge des externen Donors im Bereich von 0,5 bis 10 Gewichtsprozent der Gesamtmenge an externem Donor dem Präpolymerisations-Reaktor oder dem Slurry-Reaktor zugeführt wird und die verbleibende Menge dem ersten und zweiten GPR mit einem Gewichts-ppm-Verhältnis im Bereich von 2,5 bis 6 zugeführt wird.

## Revendications

**1.** Copolymère de propylène hétérophasique comprenant

a) une matrice d'homo- ou de co-polymère de propylène présentant un $MFR_2 \geq 150$ g/10 min conformément à la norme ISO 1133 (230°C, charge de 2,16 kg), et
b) un copolymère de propylène élastomère trimodal dispersé dans ladite matrice, ledit copolymère de propylène élastomère trimodal étant trimodal en ce qui concerne la distribution des masses moléculaires (MWD) et/ou la teneur en comonomères,
dans lequel

(i) la fraction soluble dans le xylène froid du copolymère de propylène hétérophasique à la température ambiante est présente en une quantité de 20 à 80 % en poids du copolymère de propylène hétérophasique, ladite fraction soluble dans le xylène froid étant déterminée à 23°C conformément à la norme ISO 6427,
(ii) la phase amorphe de la fraction soluble dans le xylène froid du copolymère de propylène hétérophasique présente une viscosité intrinsèque, mesurée conformément à la norme ISO 1628-1 (à 135°C dans la tétraline), d'au moins 2,5 dl/g, ladite fraction soluble dans le xylène froid étant déterminée à 23°C conformément à la norme ISO 6427,
(iii)ledit copolymère de propylène hétérophasique présente un module de flexion, conformément à la norme ISO 178, inférieur à 800 MPa, un point de fusion, mesuré par DSC, de 155 à 170°C, et une teneur totale en éthylène de 10 à 35 % en poids.

**2.** Copolymère de propylène hétérophasique selon la revendication 1, dans lequel la matrice dudit copolymère de propylène hétérophasique est un homopolymère de propylène présentant un $MFR_2 \geq 200$ g/10 min et pouvant aller jusqu'à 1000 g/10 min, conformément à la norme ISO 1133 (230°C, charge de 2,16 kg).

**3.** Copolymère de propylène hétérophasique selon la revendication 1 ou 2, dans lequel le copolymère de propylène élastomère trimodal comprend

(x) une première fraction de copolymère d'éthylène/ propylène (EPR1),
(y) une deuxième fraction de copolymère d'éthylène/ propylène (EPR2),
(z) une troisième fraction de copolymère d'éthylène/ propylène (EPR3),
et dans lequel

- la première fraction de copolymère d'éthylène/ propylène comprend 15 à 35 % en poids d'éthylène, de préférence 20 à 30 % en poids de comonomère d'éthylène, et présente une viscosité intrinsèque de la phase amorphe de 2 à 4 dl/g, conformément à la norme ISO 1628-1 ;
- le deuxième copolymère d'éthylène/propylène présente une teneur en comonomère d'éthylène (% en poids) supérieure à celle du premier copolymère d'éthylène/propylène, et le troisième copolymère d'éthylène/propylène présente une teneur en comonomère d'éthylène supérieure à celle du deuxième copolymère d'éthylène/propylène.

**4.** Copolymère de propylène hétérophasique selon la revendication 3, dans laquelle EPR1 est une fraction riche en propylène, EPR3 est une fraction riche en éthylène comprenant 56 à 85 % en poids d'éthylène, et EPR2 comprend 55 à 36 % en poids d'éthylène.

**5.** Copolymère de propylène hétérophasique selon la revendication 3 ou 4, dans lequel le copolymère de propylène élastomère trimodal comprend

(x) 40 à 80 % en poids, de préférence 60 à 75 % en poids, d'EPR1,
(y) 10 à 35 % en poids, de préférence 15 à 30 % en poids, d'EPR2, et
(z) 5 à 30 % en poids, de préférence 10 à 30 % en poids, d'EPR3,

la somme (x) + (y) + (z) étant de 100 %.

**6.** Copolymère de propylène hétérophasique selon l'une quelconque des revendications 1 à 5, dans lequel

(i) la fraction soluble dans le xylène froid dudit copolymère de propylène hétérophasique à la température ambiante est présente en une quantité de 30 à 70 % en poids du copolymère de propylène hétérophasique, ladite fraction soluble dans le xylène froid étant déterminée à 23°C conformément à la norme ISO 6427,
(ii) la phase amorphe de la fraction soluble dans le xylène froid du copolymère de propylène hétérophasique présente une viscosité intrinsèque, mesurée conformément à la norme ISO 1628-1 (à 135°C dans la tétraline), d'au moins 2,6 dl/g et allant jusqu'à 5,0 dl/g, ladite fraction soluble dans le xylène froid étant déterminée à 23°C conformément à la norme ISO 6427,
(iii)ledit copolymère de propylène hétérophasique présente un module de flexion, conformément à la norme ISO 178, inférieur à 700 MPa, un point de fusion, mesuré par DSC, de 158 à 170°C, un $MFR_2$, conformément à la norme ISO 1133 (230°C, charge de 2,16 kg), situé dans la plage allant de 0,3 g/10 min à 30 g/10 min, et une teneur totale en éthylène de 13 à 25 % en poids.

**7.** Copolymère de propylène hétérophasique selon l'une quelconque des revendications 1 à 5, lequel copolymère de propylène hétérophasique présente une résistance au choc Charpy sur barreau entaillé, conformément à la norme ISO 179 (1eA) à 23°C, d'au moins 50 $kJ/m^2$, et une résistance au choc Charpy sur barreau entaillé, conformément à la norme ISO 179 (1eA) à -20°C, d'au moins 30 $kJ/m^2$.

**8.** Procédé pour la préparation d'un copolymère de propylène hétérophasique selon l'une quelconque des revendications 1 à 7, ledit copolymère de propylène hétérophasique comprenant une matrice de propylène et un copolymère de propylène élastomère trimodal dispersé dans ladite matrice, lequel procédé comprend les étapes

- de polymérisation de propylène et éventuellement un comonomère d'éthylène dans un premier réacteur en suspension, ce qui donne, en tant que produit du réacteur en suspension, la matrice d'homo- ou de co-polymère

de propylène,
- de transfert du produit du réacteur en suspension dans un 1er GPR (réacteur en phase gazeuse),
- de production d'une première fraction de copolymère d'éthylène/propylène dans la matrice de propylène dans ledit 1er GPR,
- de transfert du produit du 1er GPR dans un 2ème GPR,
- de production d'une deuxième fraction de copolymère d'éthylène/propylène en présence dudit produit du 1er GPR dans ledit 2ème GPR,
- de transfert du produit du 2ème GPR dans un 3ème GPR,
- de production d'une troisième fraction de copolymère d'éthylène/propylène en présence dudit produit du 2ème GPR dans ledit 3ème GPR, lesdits 1er, 2ème et 3ème mélanges d'éthylène/ propylène présentant des compositions différentes, et
- de récupération du copolymère de propylène hétérophasique pour un traitement ultérieur,
ledit procédé étant mis en oeuvre en présence d'un système catalyseur comprenant
- un procatalyseur de Ziegler-Natta (r) et
- un cocatalyseur organométallique (s) et
- un donneur externe (t) représenté par la formule (III)

$$Si\ (OCH_2CH_3)_3(NR^3R^4)$$

dans laquelle $R^3$ et $R^4$ peuvent être identiques ou différents et représentent un groupe hydrocarboné possédant 1 à 12 atomes de carbone.

**9.** Procédé selon la revendication 8, dans lequel le procatalyseur utilisé est un procatalyseur de Ziegler-Natta qui contient un produit de trans-estérification d'un alcool en $C_1$ à $C_2$ et d'un ester phtalate en tant que donneur interne, et qui est éventuellement modifié avec un composé vinylique de formule $CH_2$=CH-$CHR^1R^2$, dans laquelle $R^1$ et $R^2$ forment ensemble un cycle aromatique à 5 ou 6 chaînons, saturé ou insaturé, ou bien représentent indépendamment un groupe alkyle comprenant 1 à 4 atome(s) de carbone.

**10.** Procédé selon la revendication 9, dans lequel le procatalyseur utilisé a été préparé par

a) réaction d'un adduit solidifié en émulsion ou cristallisé par pulvérisation de $MgCl_2$ et d'un alcool en $C_1$ à $C_2$ avec du $TiCl_4$,
b) réaction du produit de l'étape a) avec un phtalate de dialkyle de formule (I)

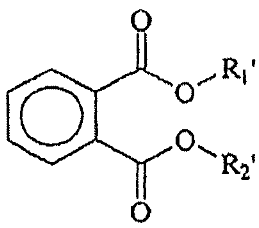

(I)

dans laquelle $R_1$' et $R_2$' sont indépendamment au moins un alkyle en $C_5$,
dans des conditions dans lesquelles a lieu une trans-estérification entre ledit alcool en $C_1$ à $C_2$ et ledit phtalate de dialkyle de formule (I) pour former le donneur interne,
c) lavage du produit de l'étape b), et
d) éventuellement réaction du produit de l'étape c) avec du $TiCl_4$.

**11.** Procédé selon la revendication 10, **caractérisé en ce que** le phtalate de dialkyle de formule (I) est le phtalate de di(éthylhexyle) et **en ce que** l'alcool en $C_1$ à $C_2$ est l'éthanol.

**12.** Procédé selon l'une quelconque des revendications 8 à 11, dans lequel le procatalyseur de Ziegler-Natta est utilisé en présence d'un cocatalyseur organométallique choisi dans l'ensemble constitué par un trialkyl-aluminium, un chlorure de dialkyl-aluminium, et un sesquichlorure d'alkyl-aluminium.

**13.** Procédé selon la revendication 12, **caractérisé en ce que** le cocatalyseur est le triéthyl-aluminium ou le chlorure de diéthyl-aluminium.

**14.** Procédé selon l'une quelconque des revendications 8 à 13, dans lequel le procatalyseur de Ziegler-Natta est utilisé en présence de diéthylaminotriéthoxysilane en tant que donneur externe.

**15.** Procédé selon l'une quelconque des revendications 8 à 14, dans lequel le composé vinylique convenant pour modifier le procatalyseur est choisi parmi le vinylcyclohexène, le vinylcyclopentane, le vinyl-2-méthylcyclohexène et le vinylnorbornane, le 3-méthyl-1-butène, le styrène, le p-méthylstyrène, le 3-éthyl-1-hexène, et leurs mélanges.

**16.** Procédé selon l'une quelconque des revendications 8 à 15, lequel procédé comprend une étape de prépolymérisation.

**17.** Procédé selon l'une quelconque des revendications 8 à 16, dans lequel le donneur externe n'est introduit que dans les premier et deuxième réacteurs en phase gazeuse afin que la vitesse de production soit contrôlée avec un rapport de la quantité de donneur externe introduit dans le premier GPR et la quantité de donneur externe introduit dans le deuxième GPR situé dans la plage allant de 2,5 à 6 (ppm en poids).

**18.** Procédé selon l'une quelconque des revendications 8 à 17, dans lequel une petite quantité de la quantité totale de donneur externe, située dans la plage allant de 0,5 à 10 % en poids de la quantité totale de donneur externe, est introduite dans le réacteur de prépolymérisation ou dans le réacteur en suspension, et la quantité restante est introduite aux premier et deuxième GPR avec un rapport en ppm en poids situé dans la plage allant de 2,5 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0887379 A
- WO 9212182 A
- WO 9924478 A
- WO 9924479 A
- WO 0068315 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 2004029112 A
- WO 9219659 A
- WO 9219653 A
- WO 9219658 A
- US 4347160 A
- US 4382019 A
- US 4435550 A
- US 4465782 A
- US 4473660 A
- US 4530912 A
- US 4560671 A
- EP 0491566 A
- WO 9924503 A
- EP 1538167 A
- EP 1028984 A
- EP 1183307 A